# EUROPEAN PATENT SPECIFICATION

(11) **EP 0 610 780 B1**
(45) Date of publication and mention of the grant of the patent: **30.09.1998**
(21) Application number: 94101474.8
(22) Date of filing: 01.02.1994
(51) Int. Cl.: B65G 60/00, B65G 59/02, B65G 59/00, B65G 57/11, B65G 57/00, B65G 47/51

(54) **Article palletizer/depalletizer**
Palettier/Entpalettieranlage für Gegenstände
Palettiseur/dépalettiseur pour articles

(30) Priority: 12.02.1993 US 16969; 11.03.1993 US 29554
(43) Date of publication of application: 17.08.1994
(73) Proprietor: GOLDCO INDUSTRIES INC., Loveland Colorado 80537 (US)
(72) Inventor: Vandermeer, Richard H., Loveland, Colorado 80538 (US); Simkowski, Donald J., Loveland, Colorado 80538 (US)
(74) Representative: Baillie, Iain Cameron

(56) References cited:
- US-A- 3 543 949
- US-A- 3 934 713
- US-A- 3 937 336
- US-A- 4 570 783

## Description

### Field of the Invention

This invention relates to an article palletizer and/or depalletizer.

### Background of the Invention

It is oftentimes necessary to convey articles, such as cans, between different locations and/or to store the articles between stages of operation. Palletizers are well known for use in storing articles, such as cans, and it is well known that groups of such articles can be stored on a pallet by layers, or tiers (see, for example, U.S. Patent Nos. 4,759,673, 4,834,605 and 4,934,508).

It also well known that tiers of articles can be urged onto a pallet using a sweep arrangement (see, for example, U.S. Patent Nos. 3,934,713 and 4,978,275), and that a sheet transfer unit can be utilized to place sheets between each tier of articles on the pallet (see, for example, U.S. Patent Nos. 4,759,673 and 4,809,965).

It is likewise well known that articles on a pallet can be urged from the pallet by a movable arm pushing the articles from the pallet (see, for example, U.S. Patent No. 3,389,810), and it is also known that groups of articles can be led and urged from a pallet by a cooperating pair of arms (see, for example, U.S. Patent No. 3,543,949).

It is also oftentimes necessary that articles, or containers, moving along a conveying line be diverted from the line during operation and accumulated or stored until later needed on the line. This has been found to be necessary, for example, in conjunction with lines conveying containers, such as cans, in order to accumulate and store the containers during the course of container line operations, such as, for example, container manufacture, labeling, and/or filling. Without such an accumulating or storing capability, the associated upstream and/or downstream production equipment would have to be frequently stopped, and then later restarted, due to jams, or the like, occurring on the line.

Accumulating tables have heretofore been utilized for accumulating and storing articles, such as cans, and such tables have heretofore been operationally connected with a production or handling line such that the articles either travel along the same path toward and away from the accumulating table or travel along one path to the table and along a different path from the table. Accumulating tables, however, have been found to require considerable floor space and/or have quite limited capacity.

With requirements for increased line speeds while maintaining product quality, it has become more important that frequent stops, or even slow-downs, of article production and/or handling equipment be minimized. Thus, it has become even more important to divert then unneeded articles and provide adequate storage for such diverted articles to thereby allow, for example, the upstream portion of a container line to continue operation while the downstream portion of the line is down, and vice versa.

Palletizer/depalletizer units have also heretofore been suggested for use in storing articles diverted from a production, or handling, line, and such units have not only provided greater storage for articles diverted from such a line, but have also provided a simpler mechanism for line speed balancing (pending the placement of the unit with respect to the line) by allowing accumulation, by palletizing, of all articles that the downstream portion of the production line could not then handle, and by depalletizing stored articles and supplying such articles to the downstream equipment as needed (as might be occur, for example, if the upstream equipment was underproducing or not producing).

Palletizing/depalletizing units now known, divert articles, such as cans, from the production or handling line using a bi-directional arrangement (see, for example, U.S. Patent No. 3,389,810) wherein the diverted articles are moved along a conveyor path in one direction from the production or handling line toward a storage pallet, and are moved in the opposite direction along the same conveyor path when the articles are urged back toward the production or handling line. Obviously, such an arrangement not only reinserts the articles at the same location as where diverted from the production or handling line, but also subjects the articles to a greater risk of damage, particularly where the direction of travel of the articles is frequently reversed. In addition, it is also known that flow-thru palletizer/depalletizer devices can be used in the main conveyor line (see, for example, U.S. Patent No. 3,788,497, on which the preamble of claim 1 is based), but it has been found that such use can also present a problem.

While now known palletizer/depalletizer units attempt to provide a balance between speed of operation and product damage, as well as retaining a capability for reversing the direction of article movement in order to allow dual modes of operation (i.e., palletizing and depalletizing of the articles), the effectiveness of now known palletizer/depalletizer units could be improved.

It is therefore an object of this invention to provide an improved article palletizing and/or depalletizing device.

It is another object of this invention to provide an improved article diverting and storage system.

It is still another object of this invention to provide an improved article diverting and storage system for use in conjunction with article conveyors establishing a flow-thru configuration.

It is still another object of this invention to provide an improved depalletizer device.

### Summary of the Invention

These objects are attained by the device according to claim 1.

This invention provides an improved article palletizing/depalletizing device that allows increased speed of operation, while minimizing product damage and also allows for the required time for changes in mode of operation to be minimized.

This invention thus is capable of providing an improved article palletizing and/or depalletizing device that utilizes sweep and retainer elements for both palletizing and depalletizing with combined palletizing/depalletizing using a thru-flow configuration that allows increased speed of operation while minimizing product damage and also allows the required time for changes in mode of operation to be minimized.

### Brief Description of the Drawings

The accompanying drawings illustrate a complete embodiment of the invention according to the best mode so far devised for the practical application of the principles thereof, and in which:
FIGURE 1 is a perspective view of the article diverting and storage system of this invention shown in conjunction with an article conveyor;
FIGURE 2 is a partial perspective view of the system shown in FIGURE 1, but taken from the side opposite to that taken in FIGURE 1; and
FIGURE 3 is a partial side view sketch of the system shown in FIGURES 1 and 2.

### Description of the Invention

Article diverting and storage system 7 is formed as a palletizer/depalletizer in a flow-thru configuration that includes a storage unit 9 wherein pallets 11 are positioned at article loading/unloading area 13 to receive, store and then later discharge articles 15 (shown as cans in the drawings).

Palletizing/depalletizing unit 17 is positioned at article loading/unloading area 13 to urge articles onto a pallet then positioned at the loading/unloading area during palletizing operations and to urge the articles from the pallet during depalletizing operations.

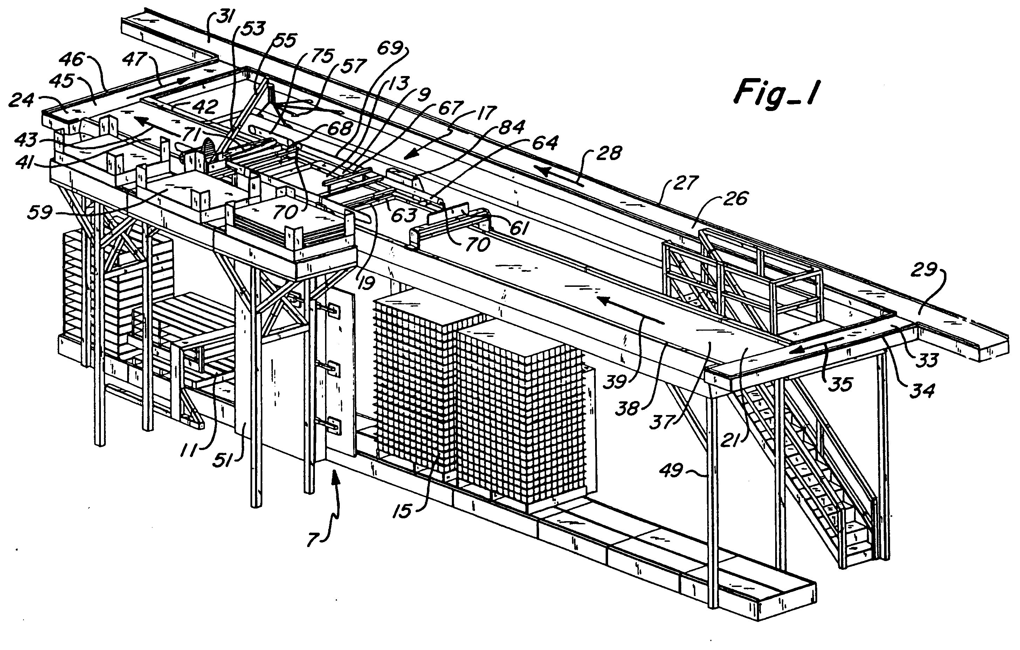

During palletizing operations, palletizing/depalletizing unit 17 operates at one side 19 (as best shown in FIGURE 1) of storage unit 9 to urge and lead articles from receiving, or incoming, article conveying unit 21 onto a pallet at the storage area, and, during depalletizing operations, palletizing/depalletizing unit 17 operates at the opposite side 23 (as best shown in FIGURE 2) of storage unit 9 to urge articles from a pallet at the storage unit onto a discharge, or outgoing, article conveying unit 24.

As best shown in FIGURE 1, system 7 is utilized in conjunction with an article conveyor 26, which conveyor is normally, for example, a part of a conveying system for moving articles, such as cans, during production and/or handling, with article conveyor 26 having sidewalls 27 and establishing a path along which the articles are moved in a predetermined direction (as indicated by arrow 28 in FIGURE 1).

For purposes of this invention, articles to be removed from article conveyor 26 are diverted from the conveyor at upstream location 29 (as illustrated in FIGURE 1) and the diverted articles are received by incoming article conveying unit 21. Articles to be inserted onto article conveyor 26 are inserted at downstream location 31 (as illustrated in FIGURE 1) by outgoing article conveying unit 24.

Article conveyor 26 may be conventional and may be, for example, an endless belt conveyor (as is now preferred) the upper surface of which is moved in the downstream direction (as indicated by arrow 28 in FIGURE 1). Article conveyor 26 could, however, be an air conveyor, a plate, such as a dead plate, along which the articles are urged, or a combination of known conveyors.

Incoming article conveying unit 21 includes a receiving end portion 33 (as illustrated in FIGURE 1) having sidewalls 34 with receiving end portion 33 opening to article conveyor 26 at upstream location 29 to divert articles from article conveyor 26 (in the direction as indicated by arrow 35) such that the articles are urged along a primary intended path away from the article conveyor (preferably, but not necessarily, along a path normal to that of articles moved along conveyor 26, as shown in FIGURE 1). Articles to be diverted from article conveyor 26 may be automatically diverted, for example, due to a backup on conveyor 26 such that articles on conveyor 26 are backed up to upstream location 29 to thus force additional articles being conveyed along conveyor 26 from the conveyor onto incoming article conveying unit 21 (a diverting gate, or the like, could also be provided at upstream location 29 to force, or divert, articles from conveyor 26 onto incoming article conveying unit 21).

Incoming article conveying unit 21 also includes a discharge end portion 37 having sidewalls 38 with receiving end portion 37 opening to receiving end portion 33 and conveying articles therefrom toward storage unit 9 (as indicated by arrow 39) with discharge end portion 37 terminating at side 19 of the storage unit adjacent to article loading/unloading area 13.

Outgoing article conveying unit 24 includes a receiving end portion 41 with sidewalls 42. Receiving end portion 41 is adjacent to side 23 of storage unit 9 to receive articles urged from the storage unit at article loading/unloading area 13. Articles urged from a pallet at article loading/unloading area 13 are moved away from the storage area (as indicated by arrow 43) along an intended primary path of travel that is in the same direction as the intended primary path of travel of articles moved to the storage area on discharge end portion 37 of incoming article conveying unit 21 to thus establish a thru-flow arrangement.

Outgoing article conveying unit 24 also includes a discharge end portion 45 having sidewalls 46 and opening adjacent to one end of receiving end portion 41 to receive articles conveyed therefrom and moves the articles along a path (as indicated by arrow 47) toward downstream location 31 on article conveyor 26 where discharge end portion 45 opens to article conveyor 26 so that the articles are inserted onto conveyor 26 at downstream location 31 (as indicated in the drawings, discharge end portion 45 is preferably, but not necessarily, positioned such that the intended primary path of travel of articles toward article conveyor 26 is in a direction normal to the primary intended path of travel of articles along article conveyor 26, and where receiving end portion 33 of incoming article conveyor unit 21 is also normal to article conveyor 26, articles are moved to and from article conveyor in parallel but opposite directions). If needed, or desired, a gate could also be provided at downstream location 31 to assure that articles are not diverted form article conveyor 26 at the downstream location.

The receiving and discharge end portions of incoming and outgoing article conveying units 21 and 24 may be endless belt conveyors (as is now preferred) the upper surface of each of which conveys articles in the direction as indicated by the arrows in FIGURES 1 and 2, or could be air conveyors, a plate, such as a dead plate, along which articles are urged, or a combination of known conveyors.

Supporting structure 49 is utilized to support the various components of system 7, with the conveying and article loading/unloading area being preferably at a height sufficient to allow pallets 11 to be brought to and carried away from storage unit 9 (as indicated in FIGURE 1).

At storage unit 9, pallets 11 are positioned to receive articles at article loading/unloading area 13 during palletizing operations with a pallet normally being placed on elevator 51 so that the first group of articles is placed on the pallet at article loading/unloading area 13 as a first layer and the pallet then being filled is indexed downwardly so that succeeding groups of articles are placed by layers one on top of the other until the pallet is filled, as is conventional. During depalletizing operations, the pallet then to be unloaded is placed so that the top layer can be removed at article loading/unloading area 13, after which the pallet is indexed upwardly as each layer is removed until the pallet is empty, as is also conventional.

Sheet transfer unit 53, having transfer arm 55 and sheet engaging means (normally vacuum cups) 57, is positioned adjacent to and above article loading/unloading area 13 to insert sheets 59 from a supply thereof one at a time on top of each layer of articles placed on a pallet at the article loading/unloading area during palletizing operations and to remove the sheet as each layer of articles is removed from the pallet during depalletizing operations.

Articles diverted from article conveyor 26 and conveyed by incoming article conveying unit 21 toward article loading/unloading area 13 are divided into groups at discharge end portion 37 of incoming article conveying unit 21 by stop unit 61. Stop unit 61 has a stop mechanism, such as extendable fingers, movable into and out of the path of articles on discharge end portion 37 to thereby control the flow of articles along discharge end portion 37 so that a group of articles is allowed to pass the stop unit each time the stop unit is moved out of the path of articles and then back into the path of the articles to block further travel of articles upstream of the stop unit along discharge end portion 37.

Each group of articles passing stop unit 61 is conveyed toward article loading/unloading area 13 and the leading (downstream) articles of the group to then be palletized come into contact with leading sweep arm 63 of sweep unit 64, and leading sweep arm 63 then leads the articles to article loading/unloading area 13. Article loading/unloading area 13 has sidewalls 65 and a movable end, or retainer, wall, or arm, 66 (at side 23 of article loading/unloading area 13) for guiding and retaining articles on pallet 11 during palletizing operations (end wall 66 is withdrawn from the path of articles moved from pallet 11 during depalletizing operations). Sweep unit 64 preferably includes three sweep arms 63, 67 and 68 (sweep arms 63, 67 and 68 are used to lead and urge articles onto the pallet during successive sweep cycles as brought out more fully hereinafter.

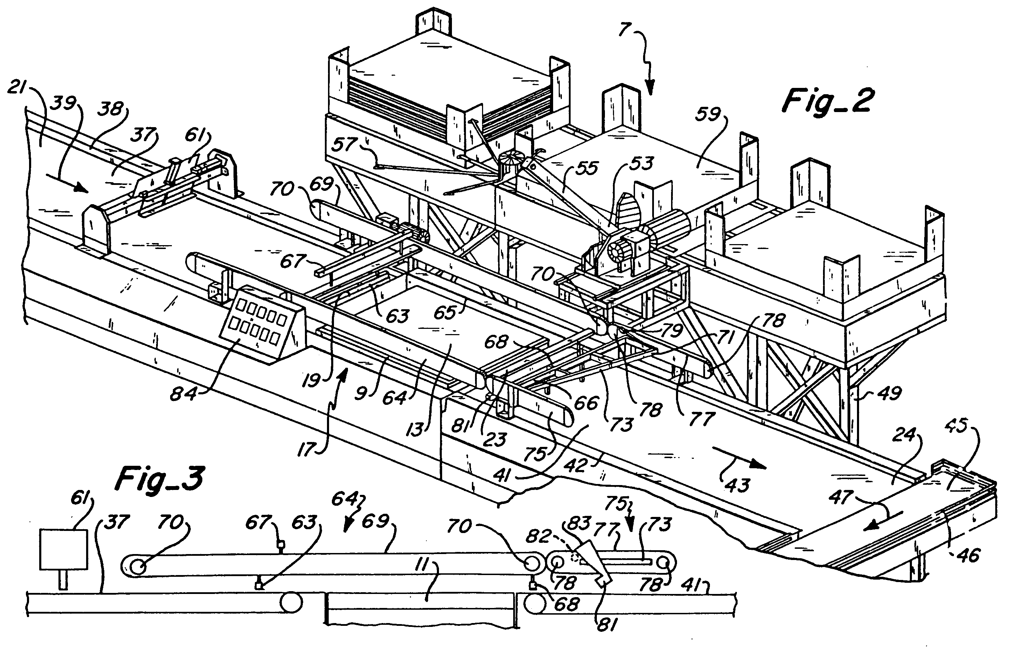

As best indicated in FIGURE 3, sweep arms 63, 67 and 68 are mounted on endless chain 69 at spaced positions so that the sweep arms are driven about an endless loop path and each sweep arm is moved through a path just above a part of discharge end portion 37 and through article loading/unloading area 13 during each complete revolution of chain 69. Chain 69 extends about sprocket wheels 70 rotatively driven by an actuator, such as an electric motor.

During placement of a first group of articles on pallet 11, sweep arm 63, acting as a leader, or stabilizer, is moved from the home position and leads a first group of articles onto the pallet, during which time, sweep arm 67 (which initially was moving upstream above the articles) is rotated down to be behind the first group of articles and sweep arm 68 (which initially was downstream of pallet 11) is rotated up and is moving upstream above the path of articles.

Sweep arm 67 then pushes, or urges, the remainder of the articles onto the pallet, during which time, sweep arm 68 continues to move upstream above the articles and sweep arm 63 is rotated out of the path of the articles. After all articles of the first group are on the pallet, the sweep arms are reversed in direction and sweep arm 67 is moved to the home position (i.e., sweep arm 67 then assumes the position shown for sweep arm 63 as indicated in FIGURE 3).

In like manner, during loading of a second group of articles onto pallet 11, sweep arm 67 is then moved from the home position to lead the articles onto the pallet and sweep arm 68 is rotated down to urge the articles onto the pallet. After all of the articles of the second group are on the pallet, the direction of movement of the sweep arms is reversed, and sweep arm 68 is moved to the home position so that sweep arm 68 can then lead the third group of articles onto pallet 11. After sweep arm 68 urges the third group of articles onto pallet 11, sweep arm 63 is used to urge the third group of articles onto the pallet, after which the direction of movement of the sweep arms is again reversed and sweep arm 63 is moved to the home position to be ready to act as the leading arm for the next group of articles to be loaded onto the pallet.

Thus, each time the articles are moved by groups during palletizing operations, one of the three sweep arms leads the articles while another of the three sweep arms later pushes the articles, with one sweep arm thus being idle during one cycle of each three cycle set.

When articles stored at storage unit 9 are later needed, articles are removed by layers from a pallet at the storage unit by urging the articles by groups from the pallet to receiving end portion 45 of outgoing article conveying unit 24 through use of palletizing/depalletizing unit 17. While shown as a combined palletizer/depalletizer, the device shown in the drawings for each of the palletizing and depalletizing operations can also be used for a single operation such as being used solely for depalletizing operations.

Sweep unit 64 is used during depalletizing operations with sweep arms 63, 67 and 68 moving in the same direction (with respect to the direction of travel of the sweep arms during palletizing operations) to urge articles from article loading/unloading area 13. Sweep arms 63, 67 and 68 successively engage the trailing, or upstream, portion of the articles to be moved from the pallet during depalletizing operations to urge each group of articles to be moved in a direction such that the leading, or downstream, portion of the group is first moved off of the pallet toward receiving end portion 41 of outgoing article conveying unit 24.

Sweep arms 63, 67 and 68 are mounted on endless chain 69 so that the sweep arms travel about a closed loop endless path, and the sweep arms are spaced from one another so that the sweep arms are successively brought into engagement with the trailing portion of successive groups of articles to be moved from the pallet during depalletizing operations.

Chain 69 is preferably of sufficient length such that sweep arms 63, 67 and 68 are spaced along the chain so that, during depalletizing operations, the sweep arms are successively brought to a home position as the chain is rotated one-third of the distance around the closed loop path of the sweep arms.

Retainer assembly, or unit, 71 is utilized to lead each group of articles moved from the pallet to receiving end portion 41 of outgoing article conveyor unit 24. As best illustrated in FIGURE 2, retainer unit 71 includes a carriage unit 73 movable back and forth in opposite directions above the path of travel of articles moved from the pallet with such movement being parallel to the direction of intended primary movement of each group of articles in being moved off of the pallet.

Carriage drive assembly 75 causes movement of the carriage unit back and forth. Carriage drive assembly 75 includes a chain 77 mounted on sprocket wheels 78 so that the chain follows a closed loop endless path. A connector arm 79 is used to connect carriage unit 73 to chain 77, to impart movement to the carriage unit when the chain is driven about the sprocket wheels, with the sprocket wheels being driven through a chain drive and clutching arrangement so that chains 69 and 77 are commonly driven to achieve precise timing between the sweep and retaining units (which units are driven at a greater speed than the conveyors forming incoming and outgoing conveying units 21 and 24).

Retainer unit 71 is normally in the home position between cycles of operation during depalletizing operations. In this position, when chain 77 is moved from the home position, carriage unit 73 is moved toward storage unit 9 until the chain has moved a sufficient distance to thereafter move carriage unit 73 in the opposite direction by continued movement of the chain about the sprockets.

Chain 77 is rotated three times about its closed loop path each time that chain 69 moves once around its closed loop path during depalletizing operations. This is preferably achieved by chain 77 being one-third as long as chain 69 and driving the chains at the same speed about like sprockets.

Retainer, or lead, arm 81 is mounted on carriage unit 73 by a retainer support arm so that retainer arm 81 is moved back and forth in a straight line path along with movement of carriage unit 73 so that retainer arm 81 may be, and preferably is, removable arm 66 during palletizing operations and is adjacent to and spaced from the leading portion of the group of articles to be then removed from the pallet during depalletizing operations (the spacing between retaining arm 81 and the leading portion of the group of articles then to be removed from the pallet is preferably a distance equal to that of the initial spacing between sweep arm 63 and the trailing portion of the group of articles then to be removed from the pallet).

Thus, when retaining unit 71 is moved from the home position during depalletizing operations, the initial movement of retaining arm 81 is in a direction opposite to the intended direction of movement of articles from the pallet. This allows the retaining arm to be brought into engagement with the leading portion of the group of articles to then be removed from the pallet as a sweep arm is brought into engagement with the trailing portion of the group of articles, after which the sweep arm and retaining arm are moved in unison so that as the sweep arm urges the engaged group of articles from the pallet the retaining arm leads the engaged group from the pallet.

Retaining arm 81 is preferably pivoted on carriage 73 using cams 82 and cam followers 83 to effect pivoting to cause retaining arm 79 to be pivoted downwardly so that retainer arm 81 is engagable with the leading portion of the group of articles then to be removed from the pallet, and to cause retaining arm 81 to be pivoted upwardly so that the retaining arm is in an article non-engagable position out of the path of travel of the group of articles being urged from the pallet during depalletizing operations.

In operation, control unit 84, preferably including a computer, may be used to control the mode of operation (i.e., palletizing operations or depalletizing operations), as well as controlling associated units to effect the desired end, including establishing needed timing and sequencing.

Summarizing operations, when the system is in the palletizing mode (i.e., during palletizing operations), articles diverted from article conveyor 26 at upstream location 29 are moved along incoming article conveying unit 21 to side 19 of storage unit 9 where the articles are urged and led by groups onto a pallet thereat using palletizing/depalletizing unit 17, with each group of articles forming successive layers on the pallet until the pallet is filled (additional pallets can be utilized, as needed, to handle all diverted articles).

When in the depalletizing mode (i.e., during depalletizing operations), articles are removed from the pallet by palletizing/depalletizing unit 17 leading and urging each group of articles onto outgoing article conveying unit 24, and outgoing article conveying unit 24 then moves the articles to article conveyor 26 where the articles are inserted onto conveyor 26 at downstream location 31.

Utilizing the system of this invention for palletizing and depalletizing operations, increased speed of operation (of up to six layers a minute, for example, as opposed to four layers per minute using at least some now known palletizing/depalletizing units) is realizable while minimizing product damage (the articles are not exposed to opposite direction movements on the same path), and reducing the required minimum time for changes in the mode of operation (articles are not required to move from one side of the system to the other before a change in mode can be effected).

As can be appreciated from the foregoing, this invention provides an improved article palletizing and/or depalletizing device.

## Claims

1. A palletizing/depalletizing device (17) for moving articles by groups onto a pallet from a main line during palletizing operations and from a pallet onto the main line at a downstream position during depalletizing operations with each said group of articles having a leading portion and a trailing portion, said device including sweep means (64) having movable article urging means (63,67,68) engagable with the trailing portion of each group of articles to be moved relative to said pallet, retainer means (71) having movable article retaining means (81) engagable with the leading portion of each said group of articles to be moved relative to said pallet, and actuating means (84) connected with said sweep means and said retainer means for causing movement of said article urging means,
said article urging means engaging said trailing portion of each said group of articles and thereafter urging each said group of articles onto said pallet during said palletizing operations, and
said actuating means also causing movement of said article retaining means whereby said article retaining means engages said leading portion of said group of articles at said pallet to preclude movement of said articles from said pallet during said palletizing operations,
characterized by
said article urging means engaging said trailing portion of each said group of articles and thereafter urging each said group of articles also from said pallet during said depalletizing operations, and
said article retaining means engaging said leading portion of said group of articles at said pallet also to lead each said group of articles from said pallet as said group of articles is moved from said pallet by said article urging means during said depalletizing operations.

2. The device of claim 1 wherein said article urging means includes a sweep arm (63) positioned adjacent to said trailing portion of said group of articles when in a home position prior to engagement with said trailing portion of each said group of articles with said sweep arm being moved from the home position into engagement with said trailing portion of said group of articles and thereafter being further moved to urge said engaged group of articles onto said pallet during said palletizing operations and from said pallet during said depalletizing operations.

3. The device of claim 2 wherein said sweep means includes at least a second sweep arm (67) and drive means (69) connected with said sweep arms so that said sweep arms are driven in a closed loop path and spaced with respect to one another along said closed loop path to alternately be brought to said home position and later moved therefrom to successively engage the trailing portion of each said group of articles successively positioned at said pallet sweep area.

4. The device of claim 3 wherein said sweep means includes first, second and third sweep arms (63,67,68).

5. The device of any of claims 1 through 4 wherein said article retaining means includes a retainer arm (81) positioned at said pallet during palletizing operations to preclude article movement from said pallet and positioned adjacent to said pallet during depalletizing operations to thereby be adjacent to said leading portion of each said group of articles when in a home position with said retainer arm being moved in a first direction from the home position into engagement with said leading portion of said group of articles and thereafter being moved in a second direction opposite to said first direction to lead said engaged group of articles from said pallet as said group of articles are urged from said pallet by said article urging means.

6. The device of claim 5 wherein said retainer means includes movable carriage means (71) having said retainer arm mounted thereon so that said retainer arm is movable in opposite directions substantially parallel to the direction of movement of said group of articles when urged from said pallet by said article urging means during said depalletizing operations.

7. The device of claim 6 wherein said retainer means includes drive means (75) having connector means (77) mounted thereon with said connector means being driven in a single direction about a closed loop path during said depalletizing operations, said retainer means also including connecting means (79) extending between said connector means and said carriage means whereby said carriage means is driven in opposite directions by said drive means when said connector means is driven through said closed loop path.

8. The device of any of claims 1 through 7 wherein both said sweep means and said retainer means include drive means (69,77) for establishing movement about closed loop paths with said closed loop path established for said sweep means providing a travel distance equal to that of said closed loop path established for said retainer means multiplied by the number of sweep arms of said sweep means.

9. The device of any of claims 1 through 8 wherein said device includes sheet transfer means (53) for placing a sheet over each group of articles urged onto said pallet during palletizing operations and for removing each sheet after removal of the preceding group of articles from said pallet during depalletizing operations.

10. The device of any of claims 1 through 9 wherein said device includes first conveying means (21) for receiving articles diverted from a main conveyor line at a first location and conveying said diverted articles toward said pallet, and second conveying means for receiving articles from said pallet and conveying articles from said pallet to said main conveyor line at a second location.

11. The device of any of claims 1 through 10 wherein said device includes article storage means capable of receiving the pallet and storing articles on said pallet.

12. The device of claim 11 wherein said first conveying means includes a receiving end portion (33) open to said main conveyor line at said first location and a discharge end portion (37) open to said article storage means, and wherein said second conveying means includes a receiving end portion (41) open to said article storage means at a location spaced from said discharge end portion of said first conveying means and a discharge end portion (45) open to said main conveyor line at said second location.

13. The device of claim 12 wherein said article storage means has first and second sides, wherein said discharge end portion of said first conveying means opens to said first side of said article storage means, and wherein said receiving end portion of said second conveying means opens to said second side of said article storage means.

14. The device of claim 13 wherein said first and second sides of said article storage means are at opposite sides of said article storage means, and wherein said articles urged to said article storage means from said first conveying means follow a path (39) primarily in substantially the same direction (43) as articles urged from said article storage means onto said second conveying means to thus establish a flow-thru system.

15. The device of any of claims 10 through 14 wherein said palletizing / depalletizing device includes gate means (61) for passing articles by groups.

## Patentansprüche

1. Palettier-/Entpalettiervorrichtung (17) zum gruppenweisen Transport von Gegenständen von einem Hauptband auf eine Palette an einer hinteren Position, und zwar während Entpalettierungsvorgängen, wobei jede Gruppe von Gegenständen ein vorderes Teilstück und ein hinteres Teilstück aufweist, wobei die genannte Vorrichtung eine Durchlaufeinrichtung (64) mit einer beweglichen Gegenstandfördereinrichtung (63, 67, 68) aufweist, die mit dem hinteren Teilstück jeder Gruppe im Verhältnis zu der Palette zu transportierender Gegenstände eingreift, mit einer Halteeinrichtung (71) mit einer beweglichen Gegenstandhalteeinrichtung (81), die mit dem vorderen Teilstück jeder genannten Gruppe von Gegenständen eingreifen kann, die im Verhältnis zu der genannten Palette transportiert wird, und mit einer Betätigungseinrichtung (84), die mit der genannten Durchlaufeinrichtung und der genannten Halteeinrichtung verbunden ist, um eine Bewegung der genannten Gegenstandfördereinrichtung zu bewirken;
wobei die genannte Gegenstandfördereinrichtung mit dem genannten hinteren Teilstück jeder genannten Gruppe von Gegenständen eingreift und danach die genannte Gruppe von Gegenständen während den genannten Palettierungsvorgängen auf die genannte Palette befördert; und
wobei die genannte Betätigungseinrichtung ferner eine Bewegung der genannten Gegenstandhalteeinrichtung bewirkt, wobei die genannte Gegenstandhalteeinrichtung mit dem genannten vorderen Teilstück der genannten Gruppe von Gegenständen an der genannte Palette eingreift, um während den genannten Palettierungsvorgängen eine Bewegung der genannten Gegenstände von der genannten Palette zu verhindern;
dadurch gekennzeichnet, daß:
die genannte Gegenstandfördereinrichtung mit dem genannten hinteren Teilstück jeder genannten Gruppe von Gegenständen eingreift und danach jede genannte Gruppe von Gegenständen ferner während Depalettierungsvorgängen von der genannten Palette befördert; und wobei
die genannte Gegenstandhalteeinrichtung mit dem genannten vorderen Teilstück jeder genannten Gruppe von Gegenständen an der genannten Palette eingreift, um jede genannte Gruppe von Gegenständen ferner von der genannten Palette zu führen, wenn die genannte Gruppe von Gegenständen während den genannten Depalettierungsvorgängen durch die genannte Gegenstandfördereinrichtung von der genannte Palette bewegt wird.

2. Vorrichtung nach Anspruch 1, wobei die genannte Gegenstandfördereinrichtung einen Ablenkarm (63) aufweist, der an der Ausgangsstellung angrenzend an das genannte hintere Teilstück der genannten Gruppe von Gegenständen angeordnet ist, vor dem Eingriff mit dem genannten hinteren Teilstück jeder genannten Gruppe von Gegenständen, wobei der genannte Ablenkarm aus der Ausgangsstellung in Eingriff mit dem genannten hinteren Teilstück der genannten Gruppe von Gegenständen bewegt wird, und wobei er danach weiter bewegt wird, um die genannte Gruppe von Gegenständen während den genannten Palettierungsvorgängen auf die Palette und während den genannten Entpalettierungsvorgängen von der Palette zu transportieren.

3. Vorrichtung nach Anspruch 2, wobei die genannte Durchlaufeinrichtung mindestens einen zweiten Ablenkarm (67) und eine Antriebseinrichtung (69) aufweist, die mit den genannten Ablenkarmen verbunden ist, so daß die genannten Ablenkarme in einem geschlossenen Weg und mit Zwischenabständen zueinander entlang dem geschlossenen Weg bewegt werden, so daß sie wechselweise an die genannte Ausgangsstellung und danach aus dieser weg bewegt werden, um nacheinander mit dem hinteren Teilstück jeder der genannten Gruppen von Gegenständen einzugreifen, die sich an dem genannten Palettendurchlaufbereich befinden.

4. Vorrichtung nach Anspruch 3, wobei die genannte Durchlaufeinrichtung erste, zweite und dritte Ablenkarm (63, 67, 68) aufweist.

5. Vorrichtung nach einem der Ansprüche 1 bis 4, wobei die genannte Gegenstandhalteeinrichtung einen Haltearm (81) aufweist, der während den Palettierungsvorgängen an der genannten Palette positioniert ist, um die Bewegung von Gegenständen von der Palette zu verhindern, und wobei der Arm während Entpalettierungsvorgängen angrenzend an die Palette positioniert ist, um an der Ausgangsstellung dadurch näher an dem vorderen Teilstück jeder genannten Gruppe von Gegenständen angeordnet zu sein, wobei der genannte Haltearm von der Ausgangsstellung in einer ersten Richtung in Eingriff mit dem genannten vorderen Teilstück der genannten Gruppe von Gegenständen bewegt wird, und wobei er danach in eine zu der ersten Richtung entgegengesetzten Richtung in eine zweite Richtung bewegt wird, um die genannte sich im Eingriff befindende Gruppe von Gegenständen von der genannten Palette zu führen, wenn die genannte Gruppe von Gegenständen durch die genannte Gegenstandfördereinrichtung von der genannten Palette transportiert wird.

6. Vorrichtung nach Anspruch 5, wobei die genannte Halteeinrichtung eine bewegliche Transporteinrichtung (71) aufweist, an welcher der genannte Haltearm angebracht ist, so daß der genannte Haltearm in entgegengesetzte Richtungen im wesentlichen parallel zu der genannten Bewegungsrichtung der genannten Gruppe von Gegenständen bewegt werden kann, wenn die Gegenstände während den genannten Entpalettierungsvorgängen durch die genannte Gegenstandfördereinrichtung von der genannten Palette befördert werden.

7. Vorrichtung nach Anspruch 6, wobei die genannte Halteeinrichtung eine Antriebseinrichtung (75) mit einer daran angebrachten Verbindereinrichtung (77) aufweist, wobei die genannte Verbindereinrichtung währen den genannten Entpalettierungsvorgängen in nur eine Richtung um den geschlossenen Weg angetrieben wird, wobei die genannte Halteeinrichtung ferner eine Verbindungseinrichtung (79) aufweist, die sich zwischen der genannten Verbindereinrichtung und der genannten Transporteinrichtung erstreckt, wobei die genannte Transporteinrichtung durch die genannte Anriebseinrichtung in entgegengesetzte Richtungen angetrieben wird, wenn die genannte Verbindereinrichtung durch den genannten geschlossenen Weg angetrieben wird.

8. Vorrichtung nach einem der Ansprüche 1 bis 7, wobei sowohl die genannte Durchlaufeinrichtung als auch die genannte Halteeinrichtung eine Antriebseinrichtung (69, 77) aufweisen, die dazu dienen, eine Bewegung um die geschlossenen Wege zu erzeugen, wobei der für die genannte Durchlaufeinrichtung erzeugte geschlossene Weg eine Bewegungsstrecke vorsieht, die der für die genannte Halteeinrichtung erzeugten Bewegungsstrecke des geschlossenen Wegs multipliziert mit der Anzahl der Ablenkarme der genannten Durchlaufeinrichtung entspricht.

9. Vorrichtung nach einem der Ansprüche 1 bis 8, wobei die genannte Vorrichtung eine Bahnfördereinrichtung (53) aufweist, die dazu dient, über jeder Gruppe der Gegenstände, die während den Palettierungsvorgängen auf die genannte Palette transportiert worden ist, eine Bahn zu plazieren, sowie zur Entfernung jeder Bahn nach der Entfernung der vorherigen Gruppe von Gegenständen von der genannten Palette während Entpalettierungsvorgängen.

10. Vorrichtung nach einem der Ansprüche 1 bis 9, wobei die genannte Vorrichtung eine erste Fördereinrichtung (21) zur Aufnahme von Gegenständen aufweist, die von einem Hauptförderband an einer ersten Position abgelenkt worden sind, sowie zum Fördern der genannten abgelenkten Gegenstände zu der genannten Palette, und mit einer zweiten Fördereinrichtung zur Aufnahme von Gegenständen von der genannten Palette sowie zum Fördern von Gegenständen von der genannten Palette zu dem genannten Hauptförderband an einer zweiten Position.

11. Vorrichtung nach einem der Ansprüche 1 bis 10, wobei die genannte Vorrichtung eine Gegenstandlagerungseinrichtung aufweist, die in der Lage ist, die Palette aufzunehmen und Gegenstände auf der genannte Palette zu lagern.

12. Vorrichtung nach Anspruch 11, wobei die genannte erste Fördereinrichtung eine aufnehmendes Endstück (33) aufweist, das zu dem genannten Hauptförderband an einer ersten Position offen ist, und mit einem ausgebenden Endstück (37), das zu der genannten Gegenstandlagerungseinrichtung offen ist, und wobei die genannte zweite Fördereinrichtung ein aufnehmendes Endstück (41) aufweist, das zu der genannten Gegenstandlagerungseinrichtung an einer von dem genannten ausgebenden Endstück der genannten ersten Fördereinrichtung entfernten Position offen ist, und mit einem ausgebenden Endstück (45), das an der genannten zweiten Position zu dem Hauptförderband offen ist.

13. Vorrichtung nach Anspruch 12, wobei die genannte Gegenstandlagerungseinrichtung erste und zweite Seiten aufweist, wobei das genannte ausgebende Endstück der genannten ersten Fördereinrichtung zu der genannten ersten Seite der genannten Gegenstandlagerungseinrichtung offen ist, und wobei das genannte aufnehmende Endstück der genannten zweiten Fördereinrichtung zu der genannten zweiten Seite der genannten Gegenstandlagerungseinrichtung offen ist.

14. Vorrichtung nach Anspruch 13, wobei die genannten ersten und zweiten Seiten der genannten Gegenstandlagerungseinrichtung auf entgegengesetzten Seiten der genannten Gegenstandlagerungseinrichtung angeordnet sind, und wobei die genannten von der ersten Fördereinrichtung zu der genannten Gegenstandlagerungseinrichtung beförderten Gegenstände einem Weg (39) im wesentlichen in die gleiche Richtung (43) folgen wie die Gegenstände, die von der Gegenstandlagerungseinrichtung auf die genannte Fördereinrichtung befördert werden, um somit ein Durchflußsystem zu erzeugen.

15. Vorrichtung nach einem der Ansprüche 10 bis 14, wobei die genannte Palettier-/Entpalettiervorrichtung eine Schleuseneinrichtung (61) aufweist, die dazu dient, Gegenstände gruppenweise durchzulassen.

## Revendications

1. Dispositif de palettisation/dépalettisation (17) pour amener des articles par groupes sur une palette à partir d'une ligne principale pendant des opérations de palettisation, et d'une palette à la ligne principale à une position en aval pendant des opérations de dépalettisation, chaque dit groupe d'articles ayant une partie de tête et une partie de queue, ledit dispositif comprenant des moyens de balayage (64) comportant des moyens mobiles de poussée d'articles (63,67,68) qui peuvent attaquer la partie de queue de chaque groupe d'articles à déplacer par rapport à ladite palette, des moyens de retenue (71) comportant des moyens mobiles de retenue d'articles (81) qui peuvent retenir la partie de tête de chaque dit groupe d'articles à déplacer par rapport à ladite palette, et des moyens de commande (84) connectés auxdits moyens de balayage et auxdits moyens de retenue pour engendrer un mouvement desdits moyens de poussée d'articles,
lesdits moyens de poussée d'articles attaquant la dite partie de queue de chaque dit groupe d'articles et poussant ensuite chaque dit groupe d'articles sur ladite palette pendant lesdites opérations de palettisation, et
lesdits moyens de commande engendrant également un mouvement desdits moyens de retenue d'articles afin que lesdits moyens de retenue d'articles viennent en contact avec ladite partie de tête dudit groupe d'articles sur la dite palette pour empêcher un mouvement desdits articles hors de ladite palette pendant lesdites opérations de palettisation,
caractérisé en ce que :
lesdits moyens de poussée d'articles attaquent ladite partie de queue de chaque dit groupe d'articles puis poussent chaque dit groupe d'articles également hors de ladite palette pendant lesdites opérations de dépalettisation,et
lesdits moyens de retenue d'articles viennent en contact avec ladite partie de tête dudit groupe d'articles sur ladite palette également pour guider chaque dit groupe d' articles hors de ladite palette lorsque ledit groupe d'articles est déplacé hors de ladite palette par lesdits moyens de poussée d'articles pendant lesdites opérations de dépalettisation.

2. Dispositif selon la revendication 1, dans lequel lesdits moyens de poussée d'articles comprennent un bras de balayage (63) qui est adjacent à ladite partie de queue dudit groupe d'articles, lorsqu'il est à une position de repos avant d'attaquer ladite partie de queue de chaque dit groupe d'articles, ledit bras de balayage étant déplacé à partir de la position de repos et amené en contact avec ladite partie de queue dudit groupe d'articles puis déplacé plus loin de manière à pousser ledit groupe attaque d'articles sur ladite palette pendant les dites opérations de palettisation et hors de ladite palette pendant lesdites opérations de dépalettisation.

3. Dispositif selon la revendication 2, dans lequel lesdits moyens de balayage comprennent au moins un deuxième bras de balayage (67) et des moyens d'entraînement (69) connectés auxdits bras de balayage de sorte que lesdits bras de balayage sont entraînés suivant un chemin en bouche fermée et mutuellement espacés le long dudit chemin en bouche fermée de manière à venir alternativement à ladite position de repos puis à s'en éloigner afin d'attaquer successivement la partie de queue de chaque dit groupe d'articles successivement placé à l'endroit de la dite zone de balayage de palette.

4. Dispositif selon la revendication 3, dans lequel lesdits moyens de balayage comprennent un premier, un deuxième et un troisième bras de balayage (63,67,68).

5. Dispositif selon une quelconque des revendications 1 à 4, dans lequel lesdits moyens de retenue d'articles comprennent un bras de retenue (81) placé à l'endroit de ladite palette pendant les opérations de palettisation afin d'empêcher un mouvement des articles hors de ladite palette et placé près de ladite palette pendant les opérations de dépalettisation afin d'être adjacent à ladite partie de tête de chaque dit groupe d'articles lorsqu'il est dans une position de repos, ledit bras de retenue étant déplace dans une première direction à partir de la position de repos pour venir en contact avec ladite partie de tête dudit groupe d'articles et étant ensuite déplacé dans une deuxième direction opposée à ladite première direction pour guider ledit groupe d'articles attaqué hors de ladite palette lorsque ledit groupe d'articles est poussé hors de ladite palette par lesdits moyens de poussée d'articles.

6. Dispositif selon la revendication 5, dans lequel lesdits moyens de retenue comprennent un chariot mobile (71) sur lequel ledit bras de retenue est monté de sorte que ledit bras de retenue est déplaçable dans des directions opposées sensiblement parallèles à la direction de mouvement dudit groupe d'articles lorsqu'il est poussé hors de ladite palette par lesdits moyens de poussée d'articles pendant lesdites opérations de dépalettisation.

7. Dispositif selon la revendication 6, dans lequel lesdits moyens de retenue comprennent des moyens d'entraînement (75) sur lesquels sont montés des moyens de liaison (77), lesdits moyens de liaison étant entraînés dans une seule direction autour d'un chemin en boucle fermée pendant lesdites opérations de dépalettisation, lesdits moyens de retenue comprenant également des moyens d'accouplement (79) entre lesdits moyens de liaison et le dit chariot de sorte que ledit chariot est entraîné dans des directions opposées par lesdits moyens d'entraînement lorsque lesdits moyens de liaison sont entraînés sur ledit chemin en boucle fermée.

8. Dispositif selon une quelconque des revendications 1 à 7, dans lequel à la fois lesdits moyens de balayage et lesdits moyens de retenue comprennent des moyens d'entraînement (69 ,77) pour établir un mouvement autour des chemins en boucle fermée, ledit chemin en boucle fermée établi pour lesdits moyens de balayage définissant une distance de déplacement égale à celle dudit chemin en boucle fermée établi pour lesdits moyens de retenue multipliée par le nombre de bras de balayage desdits moyens de balayage.

9. Dispositif selon une quelconque des revendications 1 à 8, dans lequel ledit dispositif comprend des moyens de transfert de feuille (53) pour placer une feuille sur chaque groupe d'articles poussé sur ladite palette pendant les opérations de palettisation, et pour enlever chaque feuille après enlèvement du groupe précédent d'articles hors de ladite palette pendant les opérations de dépalettisation.

10. Dispositif selon une quelconque des revendications 1 à 9, dans lequel ledit dispositif comprend des premiers moyens de transport (21), pour recevoir des articles dérivés d'une ligne de transport principale à un premier endroit et transporter lesdits articles dérivés vers ladite palette, et des deuxièmes moyens de transport pour recevoir des articles à partir de ladite palette et transporter les articles de ladite palette à la dite ligne de transport principale, à un deuxième endroit.

11. Dispositif selon une quelconque des revendications 1 à 10, dans lequel ledit dispositif comprend des moyens de stockage d'articles pouvant recevoir la palette et stocker les articles sur ladite palette.

12. Dispositif selon la revendication 11,dans lequel lesdits premiers moyens de transport comprennent une partie d'extrémité de réception (33), ouverte vers la dite ligne de transport principale audit premier endroit, et une partie d'extrémité d'évacuation (37) ouverte vers lesdits moyens de stockage d'articles, et dans lequel lesdits deuxièmes moyens de transport comprennent une partie d'extrémité de réception (41), ouverte vers lesdits moyens de stockage d'articles, à un endroit espacé de ladite partie d'extrémité d'évacuation desdits premiers moyens de transport, et une partie d'extrémité d'évacuation (45) ouverte vers ladite ligne de transport principale audit deuxième endroit.

13. Dispositif selon la revendication 12, dans lequel lesdits moyens de stockage d'articles présentent un premier et un deuxième cotés, dans lequel la dite partie d'extrémité d'évacuation desdits premiers moyens de transport est ouverte vers ledit premier côté des dits moyens de stockage d'articles, et dans lequel la dite partie d'extrémité de réception desdits deuxièmes moyens de transport est ouverte vers ledit deuxième côté desdits moyens de stockage d'articles.

14. Dispositif selon la revendication 13, dans lequel lesdits premier et deuxième côtés desdits moyens de stockage d'articles sont sur des côtés opposés desdits moyens de stockage d'articles, et dans lequel lesdits articles poussés vers lesdits moyens de stockage d'articles à partir desdits premiers moyens de transport suivent un chemin (39) principalement sensiblement dans la même direction (43) que les articles poussés à partir desdits moyens de stockage d'articles sur lesdits deuxièmes moyens de transport, pour établir ainsi un système à flux traversant.

15. Dispositif selon une quelconque des revendications 10 à 14, dans lequel ledit dispositif de palettisation/dépalettisation comprend une porte (61) pour le passage d'articles par groupes.
